# EUROPEAN PATENT SPECIFICATION

(11) **EP 1 589 498 B1**
(45) Date of publication and mention of the grant of the patent: **17.11.2010**
(21) Application number: 05008615.6
(22) Date of filing: 20.04.2005
(51) Int. Cl.: G07F 9/02, G07F 11/00, G01V 8/10

(54) **Optical barrier device**
Lichtschrankenanordnung
Barrière optique

(30) Priority: 21.04.2004 IT VR20040068
(43) Date of publication of application: 26.10.2005
(73) Proprietor: F.A.S. International S.p.A., 36015 Schio (Vicenza) (IT)
(72) Inventor: Cervo, Doriano, 36036 Torrebelvicino (Prov. of Vicenza) (IT)
(74) Representative: Perani, Aurelio

(56) References cited:
- WO-A-2004/001687
- US-A1- 2002 179 620
- US-B1- 6 384 402

## Description

The present invention relates to an optical barrier device, particularly suitable for use in vending machines, according to the preamble of claim 1.

One such machine is known, e.g., by US 2002/0179620 A1. A vending machine is generally constituted by a containment frame, provided with a front access door, which is preferably transparent so as to allow the consumer to view the available products.

The containment frame supports internally a plurality of supporting shelves or trays, which are spaced one above the other and are associated with respective dispensers, which are designed to cause, on command, the advancement of the products arranged on the shelves toward the edge of the shelves that is directed toward the front access door, in order to make them fall by gravity toward the lower portion of the containment frame, where there is a trough for receiving the discharged products. The receiving trough is of course accessible by the user by means of a withdrawal flap.

A rather frequent problem suffered by this kind of vending machines relates to failure to dispense the product selected by the user.

It has been found that this malfunction in vending machines, besides causing economic damage to the consumer, who is still forced to pay in advance and who does not get a refund if the product is not dispensed, also causes a certain distrust on the part of consumers.

In order to eliminate the causes of malfunction of said vending machines, technical solutions aimed at ensuring correct expulsion of the products from the respective trays have been devised.

Currently, some types of vending machines adopt devices for detecting that the product has been dispensed into the receiving trough.

One of the current technical solutions is constituted by an optical barrier using artificial light, constituted by pairs of photodiode-photoemitter optoelectronic components.

The emission components (since in general they emit waves in the infrared spectrum) are also commonly known as IRLEDs or IR emitters, and the corresponding detectors are also known commercially as Optodetector, Photodetector, and are all centered around the wavelength of 900 nm.

Generally, the devices described above are arranged just above the receiving trough and on opposite sides with respect to its longitudinal extension.

In practice, in order to allow the device to work, it is necessary to have two cards, one dedicated to supporting and controlling the emitters and one for the detectors.

It is evident that these embodiments, although conceptually valid, by having to use two cards consequently entail an increase in costs.

Moreover, it has been found that such devices often operate irregularly, since their reliability in detecting the falling item is also linked to the presence (in the operating region) of particular sources of artificial light or sunlight with a particular angle of incidence, as well as of electromagnetic fields, which can affect their correct detection.

Moreover, it is known that vending machines can have receiving troughs of different lengths. By using two-card optical barrier devices, it is necessary to provide a different calibration at installation time depending on the length of the receiving trough.

The aim of the present invention is to eliminate or in any case drastically reduce the drawbacks noted above in conventional optical barrier devices.

Within this aim, an object of the invention is to provide an optical barrier device that can offer better operating reliability.

Another object of the present invention is to provide an optical barrier device that can be used in receiving troughs of any size.

Another object of the present invention is to provide an optical barrier device that is capable of detecting the passage of products of any type (opaque, translucent, absorbent, et cetera), regardless of the lighting conditions of the location where the vending machine is positioned.

Another object of the invention is to provide an optical barrier device that allows to detect the passage of the product being dispensed regardless of its rate of fall.

Another object is to provide an optical barrier device that is constructively simple and has a competitive production cost, so that its use is advantageous also from an economical standpoint.

This aim and these and other objects that will become better apparent hereinafter are achieved by an optical barrier device, particularly for vending machines, according to claim 1.

Further characteristics and advantages of the invention will become better apparent from the description of some preferred but not exclusive embodiments of an optical barrier device according to the invention, illustrated by way of non-limiting example in the accompanying drawings, wherein:
Figure 1 is a diagram of an optical barrier device according to the invention; and
Figure 2 is a diagram, similar to Figure 1, of a constructive variation not according to the invention.

In the examples of embodiments that follow, individual characteristics, given in relation to specific examples, may actually be interchanged with other different characteristics that exist in other examples of embodiments.

Moreover, it is noted that anything found to be already known is understood not to be claimed and to be the subject of a proper disclaimer.

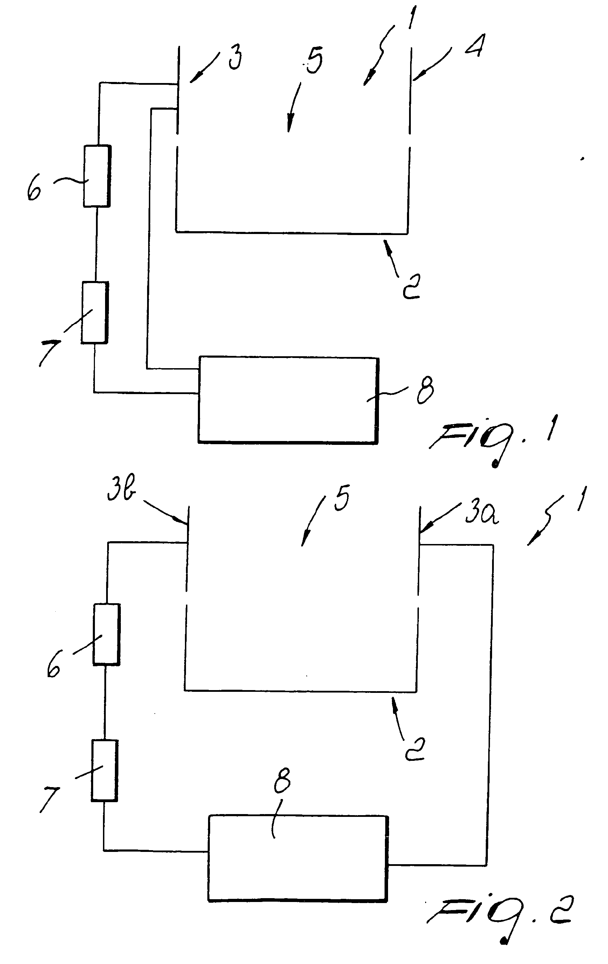

First, with reference to the diagram shown in Figure 1, an optical barrier device, particularly for vending machines, generally designated by the reference numeral 1, is designed to be arranged above a receiving trough 2 for products to be dispensed, which is generally formed within a vending machine.

The optical barrier device 1 comprises in particular a supporting structure for at least one emission/detection card 3, which is associated with means for emitting light substantially in the infrared spectrum and with detector means that are adapted to detect at least the light emitted by said emitter means.

Moreover, a reflective device 4 is associated with the supporting structure and faces the emission/detection card 3 and is adapted to reflect at least the light emitted by the emitter means toward the detector means.

In greater detail, the emission/detection card 3 and the reflective device 4 are arranged on opposite sides with respect to a drop region 5, which is meant to be crossed, during dispensing, by the products to be dispensed, which fall into the receiving trough 2.

Advantageously, the emitter means can be constituted by at least one emission device, which is adapted to emit a diverging beam that has a main direction of extension or emission that is substantially perpendicular to the planes of arrangement of the reflective device and optionally to the plane of arrangement of the emission/detection card 3.

More particularly, the emitter device can be constituted by a pulsed light emitting diode or by an IRLED (or IR emitter).

The detector means are instead constituted by one or more photodiodes, also known commercially as Optodetector or Photodetector.

According to a preferred embodiment, the reflective device 4 comprises at least one reflector panel, which is constituted for example by a reflector sticker, which is adapted to produce a diffuse light of the incident beams.

Conveniently, the emitter means have a plurality of IRLEDs, which are adapted to emit pulsed light at a frequency comprised substantially between 4 and 6 KHz and preferably between 4.5 and 5.5 KHz.

The detector means instead can comprise a plurality of photodiodes associated with an amplification and gain control circuit.

The amplification and gain control circuit is conveniently associated with a low-pass filter, which is adapted to allow the passage of signals at frequencies higher than 1000 Hz, required to avoid the passage of sunlight or artificial light.

According to another aspect of the invention shown in the diagram of Figure 2, it is possible to provide, above a receiving trough for products to be dispensed, a supporting structure for at least one emission card 3a, which supports means for emitting light substantially in the infrared spectrum, and at least a detection card 3b, which supports detection means adapted to detect at least the light emitted by the emitter means.

As clearly shown, the emission card 3a and the detection card 3b are arranged on opposite sides with respect to a drop region 5, which is meant to be crossed, during dispensing, by the products to be dispensed.

In particular, the emitter means can, in this case also, advantageously comprise a plurality of IRLEDs, which are adapted to emit pulsed light at a frequency substantially comprised between 4 and 6 KHz, while the detector means can comprise a plurality of photodiodes associated with an amplification and gain control circuit, optionally associated with a low-pass filter adapted to allow the passage of signals at frequencies higher than 1000 Hz, required to avoid the passage of sunlight or artificial light.

With reference to the embodiment shown in Figure 1 and to the embodiment shown in Figure 2, the optical barrier device 1 can have, downstream of the photodiodes and of the amplification and gain control circuit, a band-pass filter 6, which allows the passage of signals that have a frequency comprised substantially between 4 and 6 KHz in order to prevent unwanted interference caused by the possible presence of neon lights (ballasts).

Conveniently, downstream of the low-pass filter 6 there is an analog-digital converter 7, which is adapted to convert the signal in output from the band-pass filter 6 from analog to digital in order to send it to a data processing unit 8.

Operation of the optical barrier device according to the invention is as follows.

When the device is switched on, the calibration device is activated and determines the optimum emission frequency (comprised between 4.5 and 5.5 KHz) so as to compensate for the scatter of the characteristics of the components and achieve the best reading sensitivity.

Since the band-pass filter 6 is in fact generally constituted by so-called "passive" components (resistors and capacitors characterized by a certain tolerance), it is necessary to avoid any phase shifts between the signal emitted by the emitter means and the signal in output from the band-pass filter 6.

However, the calibration means must be able to compare a square-wave signal (the signal emitted by the emitter means) with a sinusoid in output from the band-pass filter 6, which is the fundamental harmonic of the signal.

To allow the analog-digital converter to read the amplitude of the signal, said signal (the signal in output from the band-pass filter 6) must be synchronized with the signal emitted by the emission means, so as to be able to perform the reading always at the same point of the sinusoidal wave.

For this reason, the calibration device generates a series of square-wave emission frequencies (sweep) (between 4.5 and 5.5 KHz), while the data processing unit 8 must determine when the derivative of the sinusoidal wave in output from the band-pass filter becomes zero, so as to obtain the emission frequency that ensures the maximum amplitude of the sinusoidal wave and therefore the highest efficiency as well as the central frequency.

Thereafter, once the optimum emission frequency has been determined, as briefly described above, the optical barrier device 1 provides for the automatic adjustment of the emission intensity by varying the power supply current of the emission devices (IRLEDs) and checking that the waveform of the signal is not distorted.

The possibility to perform, by means of the adjustment or calibration device, automatic calibration of the signal when the optical barrier device 1 is switched on allows to use the optical barrier device 1 in vending machines of different sizes without having to perform manual calibration during installation.

It is evident that once the device has been self-calibrated, if the products to be dispensed pass through the drop region 5, the detector means detect a variation of the light signal (in the emission frequency), reporting it to the data processing unit 8.

If, within a certain time after product request, the detector means do not detect a decrease in the signal, the processing unit 8 processes a dispensing failure signal (which can be handled in different manners).

Advantageously, the processing unit 8 can be associated with the product dispensing means or, if the product is not dispensed, can act thereon in order to cause dispensing or return of credit.

All the characteristics of the invention described above as advantageous, convenient or the like may also be omitted or be replaced with equivalents.

The invention thus conceived is susceptible of numerous modifications and variations, all of which are within the scope of the appended claims.

In practice it has been found that the apparatus thus described can be adapted to any withdrawal pocket without having to perform manual calibration.

It has been found that the optical barrier device according to the invention allows to achieve high sensitivity to the passage of the products.

Moreover, as clearly understandable from what has been described above, by using a single support card, production costs have been limited significantly.

In practice it has been found that the invention has achieved its intended aim and objects in all the embodiments.

In practice, the materials used, so long as they are compatible with the contingent use, as well as the shapes and the dimensions, may be any according to requirements.

All the details may further be replaced with other technically equivalent elements.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An optical barrier device, particularly for vending machines, comprising, above a receiving trough (2) for products to be dispensed, a supporting structure for at least one emitting and receiving card (3), which is associated with means for emitting light and with detector means adapted to detect at least the light emitted by said emitting means, and at least one reflective device (4), which faces said card (3) and is adapted to reflect at least the light emitted by said emitting means toward said detection means, said emitting and receiving card (3) and said reflective device (4) being arranged on opposite sides with respect to a drop region (5) that is adapted to be crossed, during dispensing, by said products to be dispensed
**characterized in that**
said means for emitting light emit light substantially in the infrared spectrum and **in that** said emitting means comprise at least one emission device adapted to emit a diverging beam whose main longitudinal direction is substantially perpendicular to said reflective device (4).

2. The optical barrier device according to claim 1, **characterized in that** said emitter device comprises a pulsed light emitter diode or an IRLED.

3. The optical barrier device according to one or more of the preceding claims, **characterized in that** said detector means comprise at least one photodiode.

4. The optical barrier device according to one or more of the preceding claims, **characterized in that** said reflective device (4) comprises at least one reflector panel.

5. The optical barrier device according to one or more of the preceding claims, **characterized in that** said emitter means comprise a plurality of IRLEDs, which are adapted to emit pulsed light at a frequency substantially comprised between 4 and 6 KHz.

6. The optical barrier device according to one or more of the preceding claims, **characterized in that** said detector means comprise a plurality of photodiodes, which are associated with an amplification and gain control circuit associated with a low-pass filter.

7. The optical barrier device according to one or more of the claims 1-6, **characterized in that** it comprises a band-pass filter (6) downstream of said plurality of photodiodes.

8. The optical barrier device according to one or more of the preceding claims, **characterized in that** it comprises, downstream of said band-pass filter (6), an analog-digital converter, which is adapted to convert the signal in output from said band-pass filter (6) from analog to digital in order to send it to a data processing unit (8).

9. The optical barrier device according to one or more of the preceding claims, **characterized in that** it comprises a calibration device.

## Patentansprüche

1. Lichtschrankenanordnung, insbesondere für Verkaufsautomaten, umfassend eine über einer Aufnahmemulde (2) für abzugebende Produkte angeordnete Trägerstruktur für wenigstens eine Emissions- und Empfangsplatine (3), die mit Mitteln zur Lichtemission und mit zum Abtasten zumindest des von den Emissionsmitteln ausgestrahlten Lichtes angepaßten Abtastmitteln verbunden ist, und wenigstens eine Reflexionsvorrichtung (4), die der Platine (3) gegenüberliegt und zum Reflektieren zumindest des von den Emissionsmitteln ausgestrahlten Lichtes in Richtung der Abtastmittel angepaßt ist, wobei die Emissions- und Empfangsplatine (3) und die Reflexionsvorrichtung (4) bezüglich eines Fallabschnittes (5), der dazu angepaßt ist, von den abzugebenden Produkten während der Abgabe durchquert zu werden, an gegenüberliegenden Seiten angeordnet sind,
**dadurch gekennzeichnet,**
**daß** die Mittel zur Lichtemission im wesentlichen Licht im Infrarotspektrum ausstrahlen und daß die Emissionsmittel wenigstens eine Emissionsvorrichtung umfassen, die dazu angepaßt ist, einen divergierenden Strahl, dessen Hauptlängsrichtung im wesentlichen rechtwinklig zur Reflexionsvorrichtung (4) verläuft, auszustrahlen.

2. Lichtschrankenanordung nach Anspruch 1, **dadurch gekennzeichnet, daß** die Emissionsvorrichtung eine gepulste lichtemittierende Diode oder eine IRLED umfaßt.

3. Lichtschrankenanordnung nach einem oder mehreren der vorhergehenden Ansprüche, **dadurch gekennzeichnet, daß** die Abtastmittel wenigstens eine Photodiode umfassen.

4. Lichtschrankenanordnung nach einem oder mehreren der vorhergehenden Ansprüche, **dadurch gekennzeichnet, daß** die Reflexionsvorrichtung (4) wenigstens ein Reflektorfeld umfaßt.

5. Lichtschrankenanordnung nach einem oder mehreren der vorhergehenden Ansprüche, **dadurch gekennzeichnet, daß** die Emissionsmittel eine Mehrzahl von IRLEDs umfassen, die zur Emission von gepulstem Licht mit einer im wesentlichen zwischen 4 und 6 KHz liegenden Frequenz angepaßt sind.

6. Lichtschrankenanordnung nach einem oder mehreren der vorhergehenden Ansprüche, **dadurch gekennzeichnet, daß** die Abtastmittel eine Mehrzahl von Photodioden umfassen, die mit einem mit einem Tiefpaßfilter verbundenen Verstärkungs- und Verstärkungsregelungsschaltkreis verbunden sind.

7. Lichtschrankenanordnung nach einem oder mehreren der vorhergehenden Ansprüche, **dadurch gekennzeichnet, daß** sie einen der Mehrzahl von Photodioden nachgeschalteten Bandpaßfilter (6) umfaßt.

8. Lichtschrankenanordnung nach einem oder mehreren der vorhergehenden Ansprüche, **dadurch gekennzeichnet, daß** sie dem Bandpaßfilter (6) nachgeschaltet einen Analog-Digitalwandler umfaßt, der dazu angepaßt ist, das vom Bandpaßfilter (6) ausgespeiste Signal von analog zu digital umzuwandeln, um dieses an eine Datenverarbeitungseinheit (8) zu übermitteln.

9. Lichtschrankenanordnung nach einem oder mehreren der vorhergehenden Ansprüche, **dadurch gekennzeichnet, daß** sie eine Kalibriervorrichtung umfaßt.

## Revendications

1. Ensemble de barrière optique, en particulier pour distributeurs automatiques, comprenant, au-dessus d'une goulotte de réception (2) pour produits à distribuer, une structure porteuse pour au moins une carte émettrice et réceptrice (3) qui est reliée à des moyens d'émission de lumière et à des moyens détecteurs adaptés pour détecter au moins la lumière émise par lesdits moyens d'émission, ainsi qu'au moins un dispositif réflecteur (4) qui est placé en vis-à-vis de ladite carte (3) et est adapté pour réfléchir au moins la lumière émise par lesdits moyens d'émission en direction des moyens détecteurs, ladite carte émettrice et réceptrice (3) et ledit dispositif réflecteur (4) étant disposés de côtés opposés par rapport à une région de chute (5) qui est adaptée pour être traversée, durant la distribution, par lesdits produits à distribuer,
**caractérisé par le fait**
**que** lesdits moyens d'émission de lumière émettent de la lumière pour l'essentiel dans le spectre infrarouge et que les moyens d'émission comprennent au moins un dispositif d'émission qui est adapté pour émettre un faisceau divergent dont la direction longitudinale principale s'étend pour l'essentiel perpendiculairement au dispositif réflecteur (4).

2. Ensemble de barrière optique selon la revendication 1, **caractérisé par le fait que** ledit dispositif d'émission comprend une diode émettrice de lumière pulsée ou une DEL infrarouge.

3. Ensemble de barrière optique selon l'une ou plusieurs des revendications précédentes, **caractérisé par le fait que** lesdits moyens détecteurs comprennent au moins une photodiode.

4. Ensemble de barrière optique selon l'une ou plusieurs des revendications précédentes, **caractérisé par le fait que** ledit dispositif réflecteur (4) comprend au moins un panneau réfléchissant.

5. Ensemble de barrière optique selon l'une ou plusieurs des revendications précédentes, **caractérisé par le fait que** lesdits moyens d'émission comprennent une pluralité de DEL infrarouges qui sont adaptées pour émettre de la lumière pulsée à une fréquence comprise pour l'essentiel entre 4 et 6 KHz.

6. Ensemble de barrière optique selon l'une ou plusieurs des revendications précédentes, **caractérisé par le fait que** lesdits moyens détecteurs comprennent une pluralité de photodiodes qui sont reliées à un circuit d'amplification et de commande de gain relié à un filtre passe-bas.

7. Ensemble de barrière optique selon l'une ou plusieurs des revendications précédentes, **caractérisé par le fait qu'**il comprend un filtre passe-bande (6) monté en aval de ladite pluralité de photodiodes.

8. Ensemble de barrière optique selon l'une ou plusieurs des revendications précédentes, **caractérisé par le fait qu'**il comprend, placé en aval dudit filtre passe-bande (6), un convertisseur analogique-numérique qui est adapté pour convertir d'analogique en numérique le signal de sortie dudit filtre passe-bande (6) afin de le transmettre à une unité de traitement de données (8).

9. Ensemble de barrière optique selon l'une ou plusieurs des revendications précédentes, **caractérisé par le fait qu'**il comprend un dispositif de calibrage.
